Europäisches Patentamt

European Patent Office

Office européen des brevets

(11) Numéro de publication: **0 267 070 B1**

(12) **FASCICULE DE BREVET EUROPEEN**

(45) Date de publication du fascicule du brevet:
07.11.90

(21) Numéro de dépôt: **87402171.0**

(22) Date de dépôt: **29.09.87**

(51) Int. Cl.⁵: **F24F 3/16,** H01T 19/00

(54) Hotte à flux laminaire, avec éliminateur d'électricité statique.

(30) Priorité: **08.10.86 FR 8614023**

(43) Date de publication de la demande:
**11.05.88 Bulletin 88/19**

(45) Mention de la délivrance du brevet:
**07.11.90 Bulletin 90/45**

(84) Etats contractants désignés:
**DE GB IT**

(56) Documents cités:
**DE-A- 2 639 706**
**FR-A- 2 497 826**
**GB-A- 2 045 647**
**US-A- 2 709 954**
**US-A- 3 862 826**
**US-A- 3 942 072**
**US-A- 4 435 195**
**US-A- 4 477 263**
**US-A- 4 485 428**

(73) Titulaire: **Office National d'Etudes et de Recherches Aérospatiales (O.N.E.R.A.), 29 Avenue de la Division Leclerc, F-92320 Châtillon-sous-Bagneux(FR)**

(72) Inventeur: **Larigaldie, Serge, 17 bis, rue Marc Sangnier, F-92290 Chatenay-Malabry(FR)**
Inventeur: **Taillet, Joseph, 33, rue de la Tourelle, F-92100 Boulogne(FR)**

(74) Mandataire: **Plaçais, Jean-Yves et al, Cabinet Netter, 40, rue Vignon, F-75009 Paris(FR)**

## Description

L'invention, qui concerne les installations destinées à effectuer des traitements en atmosphère contrôlée, s'applique plus particulièrement aux dispositifs connus sous le nom de "hottes à flux laminaire" ou équivalents.

Les hottes à flux laminaire sont utilisées notamment dans l'industrie électronique, pour la fabrication des plaquettes (ou "wafers") des circuits intégrés à haute densité d'intégration (VLSI).

La fabrication de telles plaquettes s'effectue par une suite bien déterminée d'opérations du type photogravure, au moyen desquelles on réalise sur la plaquette un motif complexe répétitif. En fin de fabrication, la plaquette est découpée pour obtenir autant de circuits intégrés qu'il y a de motifs réalisés. Il est clair qu'un défaut sur le motif d'un circuit intégré ainsi obtenu le rend inutilisable, et l'on a évidemment intérêt à réduire le nombre de tels défauts, afin d'augmenter le rendement de production.

Il est utile de signaler aussi que, suivant le stade de fabrication considéré, les plaquettes gravées vont comprendre, à un premier stade, des éléments de circuits utiles non encore connectés entre eux, et, à un second stade, des ensembles déjà connectés qui forment donc de véritables circuits, sensibles à des signaux électriques qui pourraient leur être appliqués.

Les hottes à flux laminaire sont utilisées tout d'abord pour soustraire les éléments manipulés à l'action des poussières : même en très faible quantité, les poussières sont susceptibles de réduire très fortement le rendement de production. En effet, tout élément de circuit sur lequel s'attache une poussière est inutilisable.

Pour éviter l'apport de poussières par l'air entourant la plaquette, on filtre l'air d'amenée et on oriente le flux ou écoulement de cet air de façon qu'il n'y ait vers la plaquette aucune remontée d'air pollué en provenance de l'environnement du plancher ou des opérateurs. Ainsi, la plaquette, posée sur le plan de travail de la hotte, ne doit être baignée que par un flux laminaire d'air filtré. Le caractère laminaire de l'écoulement d'air s'impose pour éviter que toute turbulence de l'air n'en vienne à créer des remontées de poussières vers le plan de travail.

Mais le problème vient se compliquer, du fait que, dans les conditions de travail requises par l'industrie des circuits électroniques à haute densité d'intégration, le degré hygrométrique de l'air utilisé doit être faible. Dans ces conditions, les différents mécanismes physiques qui sont susceptibles d'engendrer et d'accumuler de l'électricité statique sur les surfaces isolantes sont très efficaces. En particulier, la surface des plaquettes de semi-conducteurs peut prendre une charge électrique élevée. Cette charge électrique crée alors un champ électrique qui attire sur la plaquette les rares poussières subsistant dans le flux laminaire, malgré la filtration réalisée à l'entrée de la hotte. Il en résulte les inconvénients déjà relevés quant au rendement de fabrication des circuits intégrés à haute densité d'intégration.

De plus, s'agissant de plaquettes constituant déjà des cir cuits, l'apparition sur ces plaquettes de charges électriques peut conduire à l'amorçage de micro-décharges, susceptibles d'entraîner la destruction de certains éléments semi-conducteurs.

En bref, l'électricité statique vient diminuer le rendement de production de circuits à grande densité d'intégration pour deux raisons :

a) pollution accrue par les poussières, au stade de la plaquette non encore câblée;

b) destruction par décharge électrique, au stade du circuit.

Il est donc essentiel, pour améliorer le rendement de production, de faire disparaître en les neutralisant les charges électriques engendrées au niveau de la hotte à flux laminaire.

Dans les hottes à flux laminaire en général, deux types d'éliminateurs d'électricité statique peuvent être utilisés pour résoudre ce problème.

On peut tout d'abord avoir recours à des éliminateurs radio-actifs, constitués par exemple d'une pastille émettrice de rayons alpha. Ces rayons ionisent l'air sur une distance de l'ordre de quelques centimètres devant la pastille. En portant cette pastille par exemple à un potentiel positif, les ions négatifs produits sont collectés par la pastille, et les ions positifs qui demeurent sont alors disponibles pour neutraliser des charges négatives dans l'environnement immédiat de la pastille. En soufflant sur la zone ionisée, on favorise le transport par le courant d'air des ions vers les zones à neutraliser.

De tels neutralisateurs possèdent un faible courant de décharge admissible (quelques dizaines de pico-ampères), et une faible distance d'action (quelques centimètres). Leur efficacité ne peut donc être grande, et ils souffrent en outre des inconvénients liés à la présence d'un produit radioactif. Tout ceci fait qu'ils ne sont pas employés couramment dans les hottes industrielles à flux laminaire.

En pratique, les hottes industrielles emploient des éliminateurs d'électricité statique utilisant une décharge en couronne, ou décharge Corona.

Pour l'équipement des hottes à flux laminaire, on utilise des unités constituées d'un réseau d'électrodes, généralement en forme de pointes faisant face à des barres, alimentées en tensions alternatives, et munies d'un ventilateur produisant à travers le réseau un écoulement d'air qui entraîne les ions vers les surfaces à neutraliser. On connaît ainsi le neutralisateur de la société américaine TECHNITOOL, le DYNASTAT de la société américaine CRP ou encore l'AEROSTAT (Marque déposée) de la société américaine SIMCO. De tels appareils, ou leurs éléments, sont également décrits dans les Brevets Etats-Unis No 3 585 448, No 4 092 543, No 4 188 530, No 4 216 518 et No 4 423 462.

Leur principe général est que, pendant une période de la tension d'alimentation, ces unités produisent successivement des ions des deux polarités. Au cours du processus de neutralisation, seuls les ions d'une polarité sont utilisés, tandis que les autres sont éliminés vers la masse.

Contrairement aux dispositifs radio-actifs, les éliminateurs à décharge Corona peuvent, lorsqu'ils sont convenablement agencés, fournir des courants de neutralisation de plusieurs microampères, capables de neutraliser en quelques dizaines de secondes des surfaces chargées, et ce à une distance supérieure au mètre. Ils doivent satisfaire aux conditions suivantes :

- fournir un débit strictement égal d'ions positifs et négatifs, afin d'éviter de porter progressivement à un potentiel élevé les surfaces isolantes ou les conducteurs isolés qui sont soumis à l'écoulement ionisé;
- éviter de produire de la turbulence aérodynamique, ou toute déformation de l'écoulement laminaire de la hotte;
- éviter l'introduction de vapeur d'eau, la pollution par l'ozone ou par des particules microscopiques arrachées par exemple à des pointes sous tension, sous l'effet du champ électrique;
- ne pas charger électriquement les quelques poussières résiduelles de l'écoulement laminaire;
- ne produire aucun danger d'électrocution du personnel.

Selon les techniques actuellement utilisées, on recherche généralement à obtenir une densité d'ions suffisante dans la hotte en faisant usage d'un flux d'air obtenu à partir d'un ventilateur auxiliaire.

L'égalité des courants d'ions positifs et négatifs est recherchée au moyen d'ajustements portant sur la forme de l'onde de la tension d'alimentation alternative, dont des exemples sont décrits dans les Brevets Etats-Unis N° 2 879 395, 3 714 731, 4 092 543 et 4 423 462 déjà mentionnés. En effet, des alternances de tension négative et positive d'égale amplitude ne fournissent pas des courants d'ions positifs et négatifs égaux, car les décharges couronnes positive et négative n'ont pas la même caractéristique courant-tension.

L'absence de turbulence est difficile à obtenir, avec les soufflantes du commerce. En toute rigueur, elle n'est satisfaite que par un appareil purement statique.

En ce qui concerne le problème des impuretés, la question de la vapeur d'eau est généralement résolue au niveau du système de conditionnement d'air de la hotte. Par contre, il s'avère que les décharges Corona produisent de l'ozone en faible quantité, en principe acceptable à condition que la tension alternative d'alimentation ne dépasse pas un seuil critique, légèrement supérieur au seuil d'amorçage de la décharge couronne.

Par ailleurs, il est nécessaire de limiter la quantité de particules arrachées au dispositif du genre pointes, c'est-à-dire l'érosion des organes nus de l'éliminateur de charge électrostatique.

Ainsi, le passage au régime d'arc, outre qu'il endommage irrémédiablement le matériel et dégrade son fonctionnement, produit de l'érosion et par conséquent des émissions de vapeurs et de particules qui empoisonnent l'atmosphère de la hotte. Il est donc tout à fait souhaitable d'utiliser un système qui, par construction, ne puisse pas passer en régime d'arc.

Enfin, l'absence de danger d'électrocution a été particulièrement étudié par la société SIMCO, dans ses Brevets Etats-Unis Nos 3 585 448 et 4 216 518.

Mais il s'avère, généralement, qu'aucun des dispositifs connus jusqu'à présent ne donne entière satisfaction.

Dans son Brevet français No 2 483 259, et dans son Certificat d'Addition 81 09646, 2 506 086, le Demandeur a décrit un dispositif éliminateur de charge électrostatique particulièrement performant, mais qui fait intervenir un écoulement supersonique auxiliaire, manifestement incompatible avec les caractéristiques de fonctionnement d'une hotte à flux laminaire.

Il est apparu maintenant qu'il est possible de résoudre les problèmes rencontrés en pratique avec les hottes à flux laminaire, en utilisant un éliminateur de charge électrostatique nouveau, et qui de surcroît ne comporte pas les inconvénients liés à l'écoulement auxiliaire des dispositifs antérieurs du Demandeur.

L'invention s'applique à un dispositif du genre hotte à flux laminaire, comprenant un meuble définissant un plan de travail dans un compartiment accessible d'un côté, et muni en partie supérieure de moyens pour produire vers le plan de travail un écoulement gazeux filtré et laminaire, de sorte que les matériaux disposés sur le plan de travail sont soustraits à l'influence de l'atmosphère ambiante (voir par exemple US-A 2 709 954).

Selon l'invention, on interpose sur l'arrivée de l'écoulement gazeux, au plafond de la hotte, un dispositif éliminateur d'électricité statique comportant :
- un cadre rigide isolant ou comportant des isolants pour supporter des fils,
- un premier jeu de fils conducteurs parallèles, coplanaires, équidistants, tendus sur le cadre,
- un second jeu de fils conducteurs parallèles, sensiblement coplanaires au premier jeu, équidistants, tendus sur le cadre, chacun sensiblement à égale distance entre deux fils du premier jeu,
- des moyens d'isolation en haute tension entre les fils du premier jeu et ceux du second jeu,
- une source de haute tension alternative, en particulier à sortie par transformateur, dont les deux bornes de sortie alimentent respectivement les fils du premier jeu, et les fils du second jeu.

Cette haute tension est choisie pour engendrer une décharge Corona alternative dans chaque intervalle entre les fils des deux jeux, et produire par là un flux de charges électriques de deux polarités, accompagnant l'écoulement laminaire, pour éliminer l'électricité statique à l'intérieur de la hotte.

Avantageusement, la haute tension alternative possède une amplitude de crête comprise entre 4 et 10 kVolts, et une fréquence comprise entre 50 et 1000 Hertz.

Pour certaines applications au moins, il s'est avéré avantageux que la haute tension alternative possède une forme d'onde constituée, sur chaque alternance, d'une forte impulsion initiale, suivie d'un palier de faible niveau pendant le reste de l'alternance. Cela peut être obtenu par le fait que la sortie de la source de haute tension est fournie par un transformateur à fer saturé.

Les moyens d'isolation comprennent avantageusement des gaines isolantes placées sur les fils du second jeu, dans leur partie tendue sur le cadre. Dans une variante, il peut s'agir d'une série de lamelles isolantes, interposées entre chaque fil du premier jeu et les fils du second jeu qui l'avoisinent.

Les fils du premier jeu peuvent comporter, dans leur partie tendue sur le cadre, des fils transversaux, parallèles entre eux de courte longueur, formant des pointes de chaque côté du fil de manière à localiser les décharges.

En variante, les fils du premier jeu sont constitués de profils à arêtes longitudinales, connus pour les précipitateurs industriels.

Dans un mode de réalisation de l'invention, le dispositif comporte en outre un amplificateur différentiel de tension, haute impédance d'entrée, passant le courant continu, dont la première entrée est reliée à un capteur de potentiel situé dans la hotte, et dont l'autre entrée est reliée à la masse. La sortie de cet amplificateur sert à fournir une tension continue de correction, que l'on superpose à la source de haute tension alternative soit par un dispositif série, soit par un dispositif parallèle.

Selon différentes variantes :
- la sortie de l'amplificateur est mise directement en série avec la source alternative;
- la sortie de l'amplificateur commande le curseur d'un diviseur de tension continue;
- la sortie de l'amplificateur est reliée, à travers une résistance au jeu de fils isolés, celui-ci étant séparé de l'alimentation alternative par un condensateur.

De son côté, le capteur de potentiel peut être défini :
- par les fils du premier jeu eux-mêmes;
- par une électrode auxiliaire, placée sur le plan de travail de la hotte; les fils du premier jeu sont reliés à la masse;
- par un cadre rigide auxiliaire à grillage conducteur, comme décrit ci-après.

Enfin, et selon un autre aspect de l'invention, il est intéressant de prévoir, au voisinage immédiat du dispositif éliminateur d'électricité statique, un second cadre rigide sur lequel est tendu un grillage conducteur à mailles très lâches, formant plan équipotentiel, de préférence relié à la masse.

D'autres caractéristiques et avantages de l'invention apparaîtront à l'examen de la description détaillée ci-après, et des dessins annexés, sur lesquels :

- la figure 1 illustre schématiquement une hotte à flux laminaire, et plus précisément les moyens qui lui sont incorporés selon l'invention;
- la figure 2A illustre un premier mode de réalisation de l'invention pour lequel le capteur de potentiel est constitué par certains des fils;
- la figure 2B illustre un second mode de réalisation de l'invention pour lequel le capteur est constitué par certains des fils;
- la figure 2C illustre un troisième mode de réalisation de l'invention pour lequel le capteur est constitué par certains des fils;

- la figure 3A illustre un premier mode de réalisation de l'invention pour lequel le capteur est une électrode séparée;
- la figure 3B illustre un second mode de réalisation de l'invention pour lequel le capteur est une électrode séparée;
- la figure 3C illustre un troisième mode de réalisation de l'invention pour lequel le capteur est une électrode séparée;
- la figure 4 illustre une autre variante de l'invention, dans laquelle le capteur de potentiel est constitué du cadre auxiliaire à grillage, cette variante étant pour le reste semblable aux figures 2C et 3C; et
- la figure 5 illustre une forme d'onde tension alternative utilisable pour la mise en oeuvre de l'invention.

Les informations contenues dans les dessins annexés sont pour l'essentiel de caractère certain. En conséquence, ces dessins sont incorporés la description, non seulement pour servir à éclairer celle-ci, mais aussi pour contribuer à la définition de l'invention, le cas échéant.

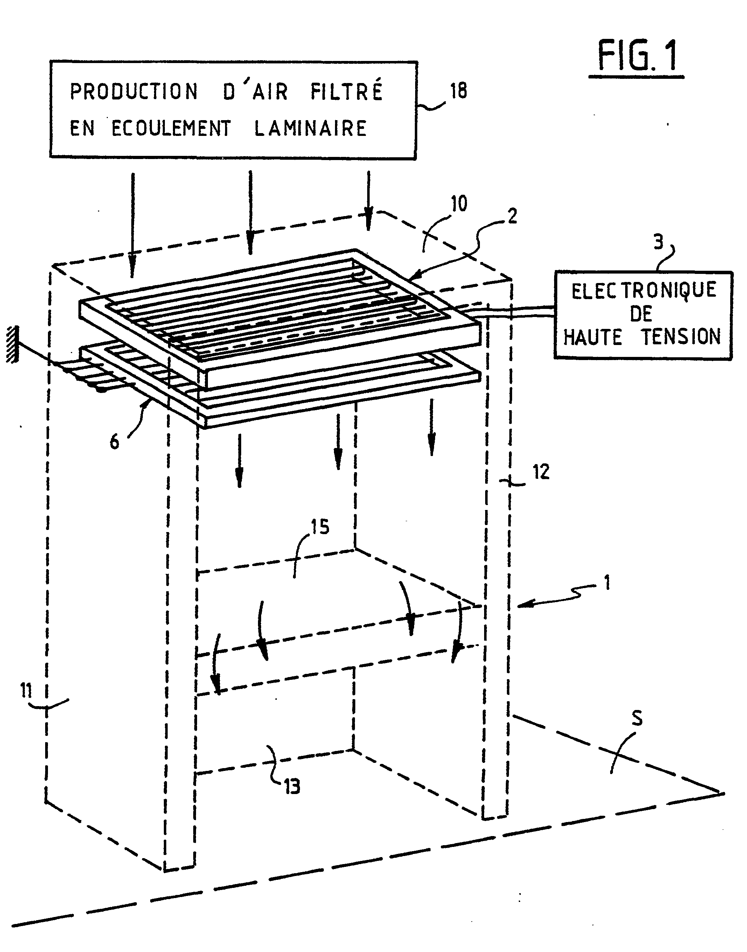

Sur la figure 1, la hotte à flux laminaire est désignée par la référence générale 1.

Elle se compose de deux parois latérales 11 et 12, et d'une paroi de fond 13, l'ensemble surmonté d'un plafond 10. Sensiblement à mi-hauteur, la hotte comporte un plan de travail 15.

En 18 sont schématisés les moyens de production d'air filtré en écoulement laminaire, qui pénètre dans la hotte à travers le plafond 10, vers le plan de travail 15. L'invention prévoit qu'on ajoute à la hotte un dispositif éliminateur d'électricité statique 2, associé à une électronique de haute tension 3. Le cas échéant, on prévoit aussi le dispositif supplémentaire 6, remarque étant faite que ce dernier n'est pas nécessaire pour obtenir les avantages de base de l'invention.

L'ensemble de la hotte est posé sur le sol S relié à la terre ainsi que les parties conductrices de la hotte.

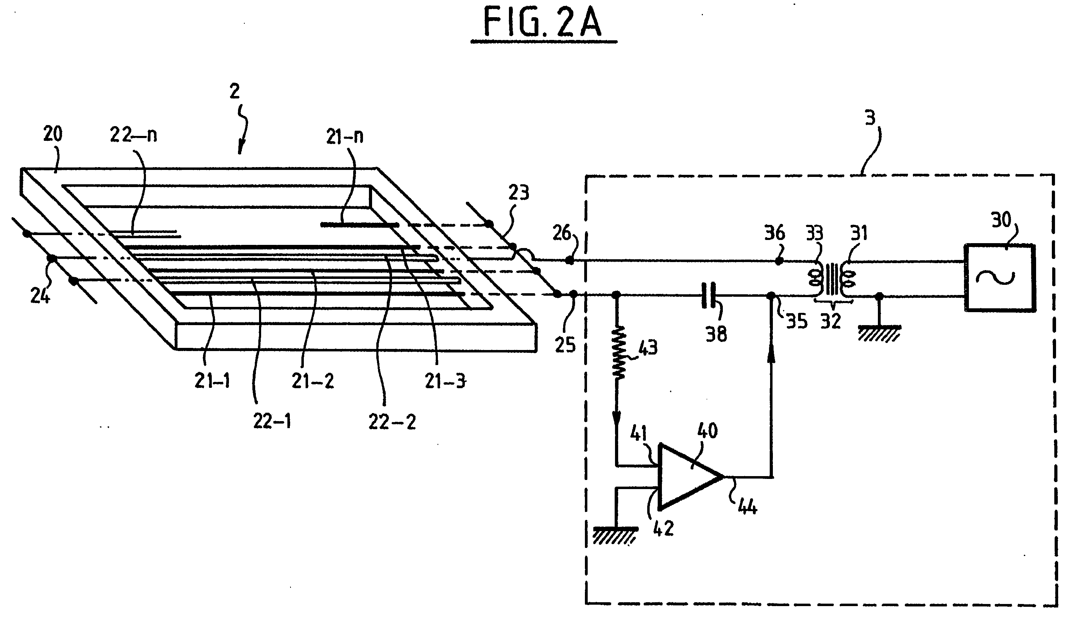

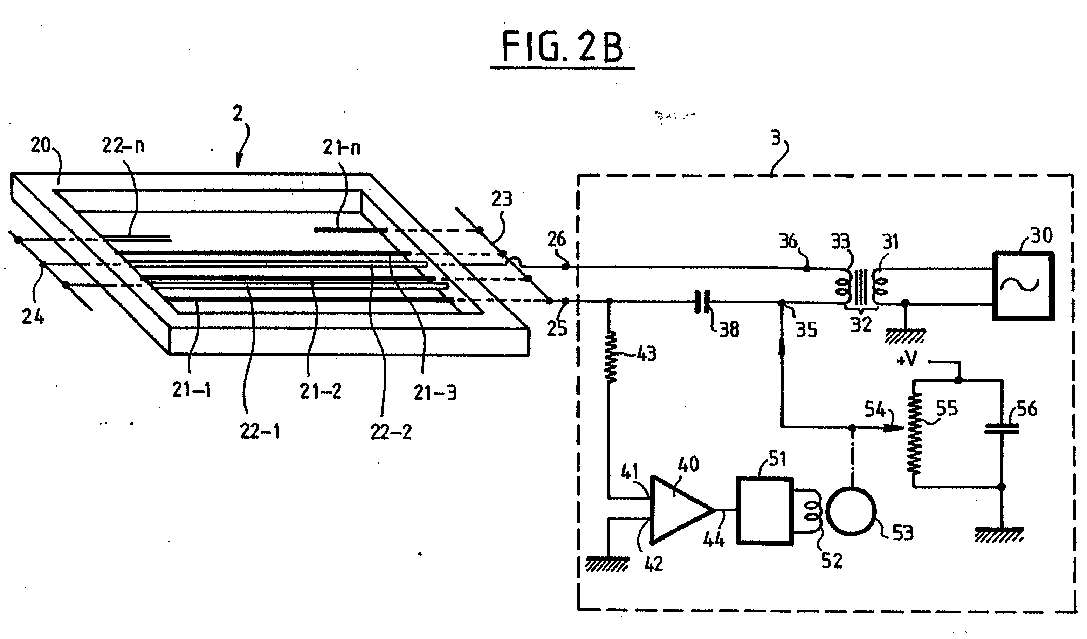

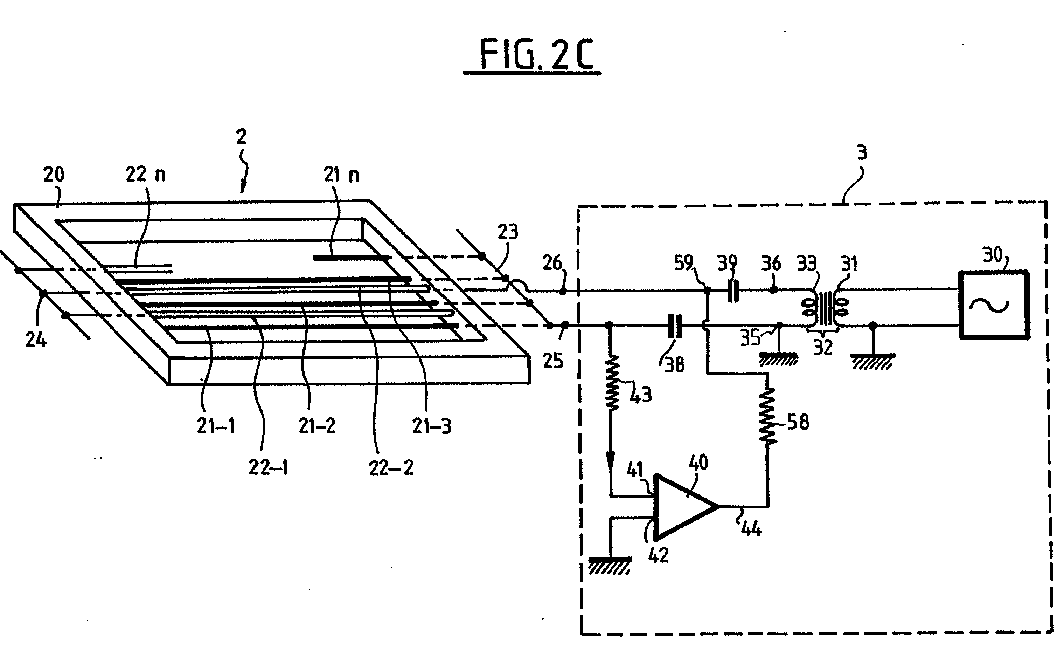

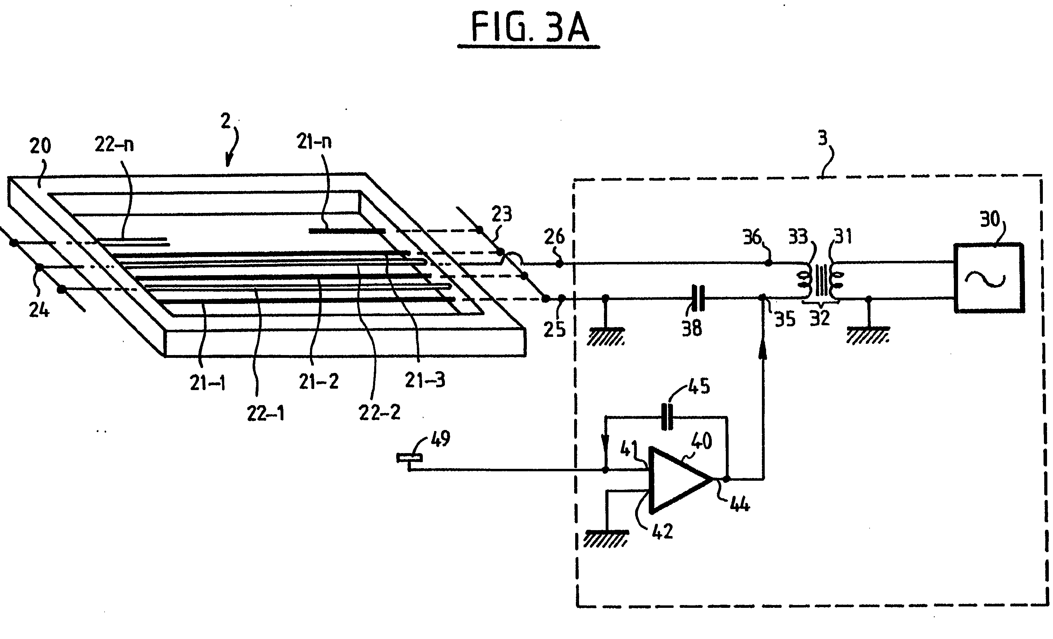

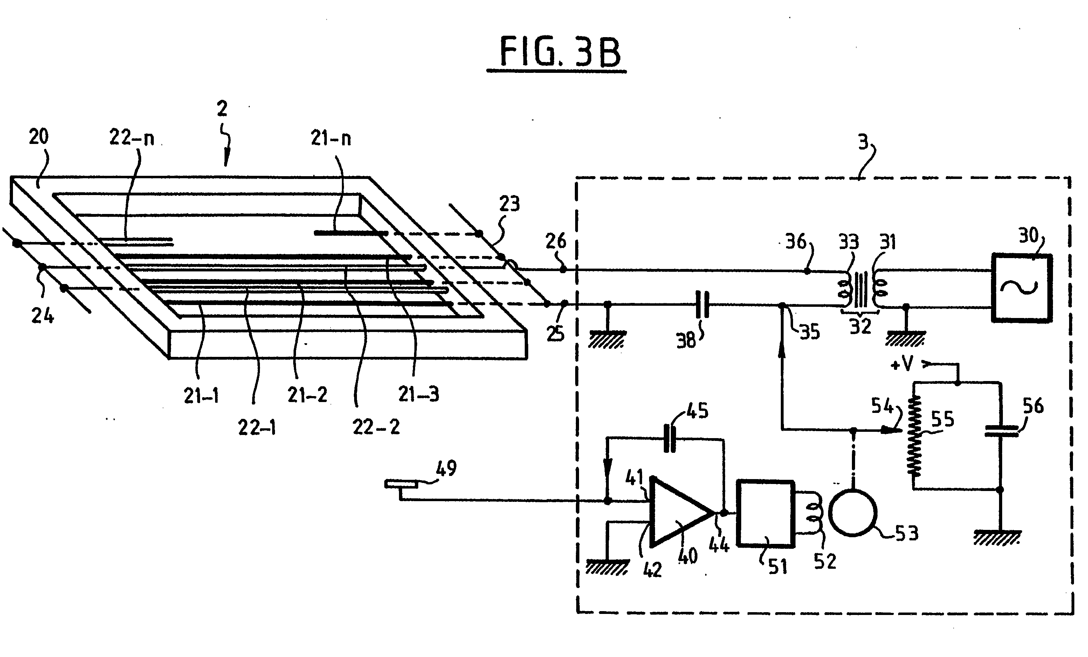

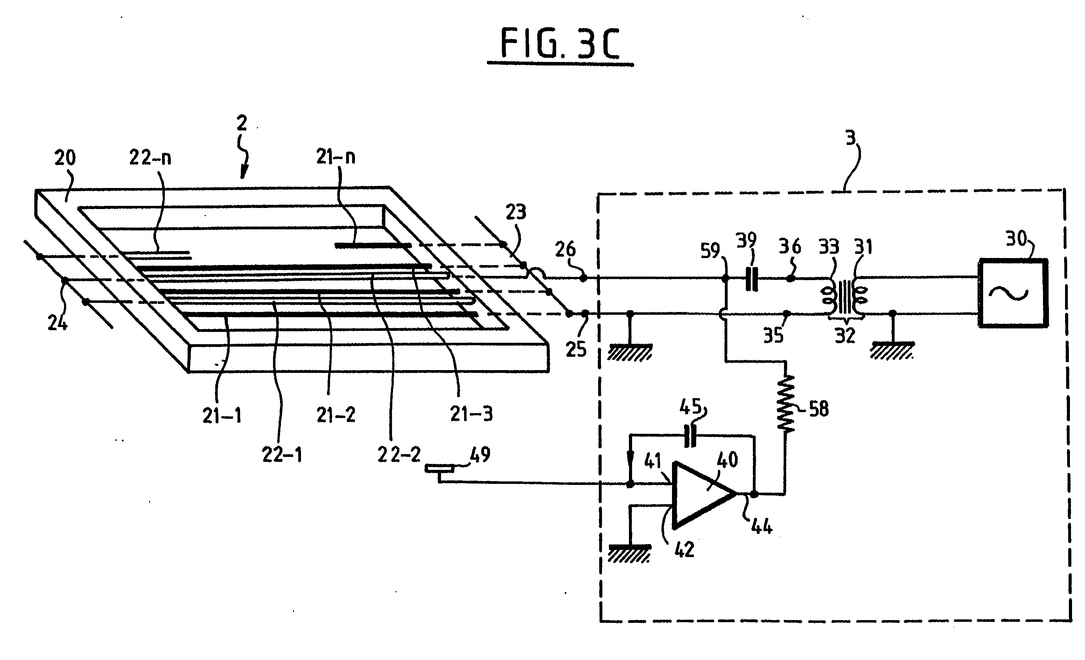

Le dispositif éliminateur d'électricité statique 2 possède la même structure sur l'ensemble des figures 2 et 3. Il sera donc décrit une seule fois.

Il se compose d'un cadre rigide 20 sur lequel sont tendus :
- des fils 21-1 à 21-n, interconnectés en 23, en principe à l'extérieur du cadre 20, et formant un premier jeu de fils; et
- des fils 22-1 à 22-n, interconnectés en 24, et formant un second jeu de fils.

Comme précédemment indiqué, les fils des deux jeux sont parallèles, coplanaires, tendus sur le cadre rigide, et équidistants non seulement dans chaque jeu, mais en plus sur l'ensemble des deux jeux. Les fils sont tendus sur le cadre lorsque celui-ci est isolant ou ils sont supportés par des isolants solidaires du cadre lorsque celui-ci est conducteur.

Une isolation en haute tension est prévue entre les fils. Bien que des lamelles interposées entre les fils des deux jeux puissent être utilisées à cet effet, on préfère ici que cette isolation soit réalisée par des gaines isolantes placées sur les fils 22-1 à 22-n.

La connexion 23 commune aux fils du premier jeu est reliée à une borne 25; la connexion 24, commune aux fils du second jeu est reliée à une borne 26. Ces deux bornes vont vers l'électronique 3, qui produit une haute tension alternative dont l'amplitude de crête, comme déjà indiqué, est comprise entre 4 et 10 kVolts, pour une fréquence comprise entre 50 et 1000 Hertz environ.

Les circuits électroniques 3 comprennent tout d'abord une source de puissance 30, qui peut être le réseau de distribution d'énergie électrique si on utilise une fréquence de 50 Hz, ou bien un convertisseur vers la fréquence convenable. La sortie de cette source 30 est appliquée à l'enroulement primaire 31 d'un transformateur 32. Une borne de l'enroulement primaire 31 peut être mise à la masse.

L'enroulement secondaire 33 de ce transformateur possède des bornes 35 et 36. La borne 35 est reliée à la borne 25 par un condensateur 38 (cf. figures 2A,B,C; 3A,B) ou directement (cf. figure 3C).

La borne 36 peut être reliée à la borne 26 soit directement, soit par l'intermédiaire d'un condensateur 39, comme on le voit sur les figures 2C et 3C.

On décrira maintenant le fonctionnement général du dispositif selon l'invention.

Au début de chaque demi-alternance de l'alimentation alternative, le champ électrique au voisinage des fils nus 21 est dû à la superposition du champ des charges accumulées sur la gaine diélectrique des fils isolés 22 adjacents pendant la demi-alternance précédente, et du champ produit par la tension maintenant en cours d'application. Le champ électrique total est donc de valeur élevée, et favorise l'ionisation au voisinage du fil nu 21 considéré. Les charges de même signe que la tension de ce fil vont migrer vers la gaine isolante.

Elles commencent par y neutraliser les charges résiduelles, puis s'accumulent en réduisant fortement le champ total, qui reste suffisamment faible pour que le flux laminaire de l'écoulement d'air principal suffise à entraîner la majorité des ions produits vers l'intérieur de la hotte.

Ce mécanisme fondamental, observé par le Demandeur, explique la possibilité d'obtenir une action de neutralisation électrostatique à grande distance, sans pour autant avoir besoin de recourir à un écoulement auxiliaire.

Par ailleurs, le cadre 20 est placé au plafond de la hotte, au-dessous du filtre à air que comporte celle-ci. Il est donc traversé sans perte de charges par le flux laminaire principal, qui entraîne les ions des deux signes vers l'intérieur de la hotte. La disposition ainsi obtenue est optimale au point de vue aérodynamique. L'apparition d'un arc électrique est en pratique impossible, du fait de l'interposition de la gaine diélectrique du fil isolé. De son côté, la production d'ozone peut être rendue minimale, par un contrôle approprié de la tension d'alimentation alternative. Il en est de même pour l'érosion sur le fil nu, et enfin la production de microparticules arrachées au système est négligeable.

La possibilité d'utiliser une fréquence supérieure à 50 Hz permet de réduire la charge communiquée aux poussières résiduelles du flux principal.

On observe enfin que la disposition du système au plafond de la hotte le soustrait au contact de l'opérateur. A cet égard, compte tenu du fait que le dispositif possède une faible consommation en courant, il est possible d'interposer des résistances de protection de valeurs élevées au niveau de chaque fil nu.

En lui-même, le dispositif qui vient d'être décrit permet une solution satisfaisante du problème posé.

Cependant, il est intéressant de lui adjoindre certains perfectionnements, pour accroître son efficacité ou sa sécurité.

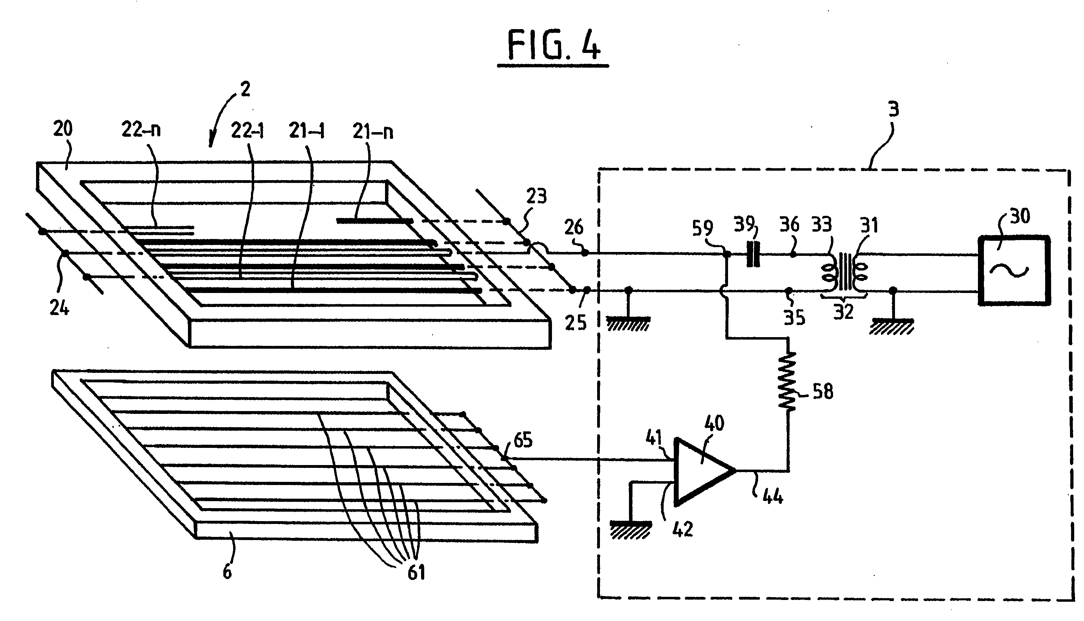

L'accroissement de l'efficacité passe par l'acquisition d'une valeur du potentiel à corriger. Le capteur de potentiel peut être constitué soit des fils nus eux-mêmes (figures 2A à 2C), soit par une électrode séparée placée de préférence au voisinage du plan de travail 15 (figure 1), ce que l'on décrira plus loin en référence aux figures 3A à 3C, soit par le cadre auxiliaire 6 (figure 4).

Sur les figures 2A à 2C, la borne 25 reliée au fil nu 21 est encore reliée par une résistance 43 à une entrée 41 d'un amplificateur différentiel 40, à haute impédance d'entrée, passant le courant continu, et dont l'autre entrée 42 est reliée à la masse.

Sur la figure 2A, la sortie 44 de l'amplificateur est reliée directement à la borne 35. En bref, l'amplificateur de tension mesure le potentiel des fils nus, et le maintient à la valeur 0 en agissant sur la polarisation de l'âme du fil isolé en série, à travers le secondaire 33 du transformateur 32 et la connexion directe entre les bornes 36 et 26.

Dans la variante illustrée sur la figure 2B, on obtient le même résultat en reliant la sortie 44 de l'amplificateur 40 à un montage 51 assurant la commande de l'enroulement stator 52 d'un moteur 53. Celui-ci déplace le curseur 54 d'un potentiomètre 55. Le potentiomètre 55 est alimenté entre une tension +V et la masse, et se trouve en parallèle sur un condensateur 56. On assure ainsi qu'un potentiel très bien déterminé est appliqué aux fils isolés 22.

Dans une autre variante (figure 2C), un condensateur 39 est interposé entre les bornes 26 et 36. La sortie 44 de l'amplificateur 40 est appliquée en parallèle avec la tension alternative par l'intermédiaire d'une résistance 58 à une borne 59 située du côté de l'armature du condensateur 39 qui est relié à la borne 26.

Comme l'amplificateur 40 a une impédance d'entrée très élevée, la dérivation constituée par cet amplificateur ne change pas le bilan en courant continu du côté des fils nus 21, car le chemin de retour pour ce courant continu est toujours coupé.

Les dispositions des figures 2A à 2C présentent l'avantage de protéger l'opérateur contre un contact accidentel avec le fil nu, dès lors que la chaîne d'asservissement maintient le potentiel des fils nus à la valeur 0.

La protection peut être encore meilleure avec les modes de réalisation des figures 3A à 3C. Ceux-ci correspondent respectivement aux cas des figures 2A à 2C; la différence réside simplement en ce qu'une électrode 49 séparée, placée au niveau du plan de travail 15, capte le potentiel à réguler, et que la borne 25 reliée aux fils nus est directement reliée à la masse.

Dans ce cas, le chemin de retour du courant continu n'est plus bloqué et, par conséquent, l'égalité des courants positif et négatif, injectés dans la hotte, n'est plus assurée par construction mais résulte du fait que son effet (élévation du potentiel de l'électrode 49) est empêché par l'asservissement décrit ci-dessous.

Cette disposition améliore encore la sécurité pour le personnel opérateur, puisque les fils nus sont, par construction, mis à la masse.

Elle offre un autre avantage, qui est d'éliminer les irrégularités du potentiel électrique à l'intérieur des hottes à flux laminaire. En effet, le volume de celles-ci n'est pas, en pratique, rigoureusement équipotentiel. L'expérience montre alors que, même si le courant continu injecté est rigoureusement nul, les forces exercées par le champ électrique résiduel à l'intérieur de la hotte sur les charges libres peuvent amener l'apparition d'un potentiel de quelques dizaines de volts sur une électrode isolée. La disposition des figures 3A à 3C donne aux fils isolés le potentiel continu convenable pour éliminer cet effet parasite sur le plan de travail.

Toujours en raison du caractère non équipotentiel du volume de la hotte, il est intéressant, du moins en certaines applications, de placer immédiatement en aval de l'éliminateur d'électricité statique 2 un cadre 6 (figure 1). Sur ce second cadre 6 est tendu un grillage à mailles très lâches, formé de conducteurs mis à la masse. Il existe alors, entre le cadre 6 et le plan de travail 15 un compartiment strictement équipotentiel.

Bien entendu, ce mode de réalisation pourvu du cadre supplémentaire 6 peut être utilisé en l'absence des moyens d'asservissement décrits aux figures 2 et 3 (dans leurs différentes variantes).

La figure 4 illustre une troisième variante de réalisation, semblable aux figures 2C et 3C, mais dans laquelle le capteur de potentiel est défini par la grille des fils 61 du cadre auxiliaire 6.

Dans cette variante, le point commun 65 des fils 61 est relié à l'entrée 41 de l'amplificateur 40 dont la sortie est appliquée, à travers la résistance 58, au point 59 situé entre le condensateur 39 et le commun 26 des fils isolés.

En outre, une mise à la masse des fils nus 21 est effectuée en 35, par exemple, remarque étant faite que le condensateur 38 disparaît. Cette autre modification peut s'appliquer aux figures 2C et 3C.

L'expérience a montré que la variante de la figure 4 allie les avantages de celles des figures 2 et 3.

Bien sûr, cette variante de la figure 4 pourrait aussi être agencée comme décrit à propos des figures 2A et 3A ou 2B et 3B.

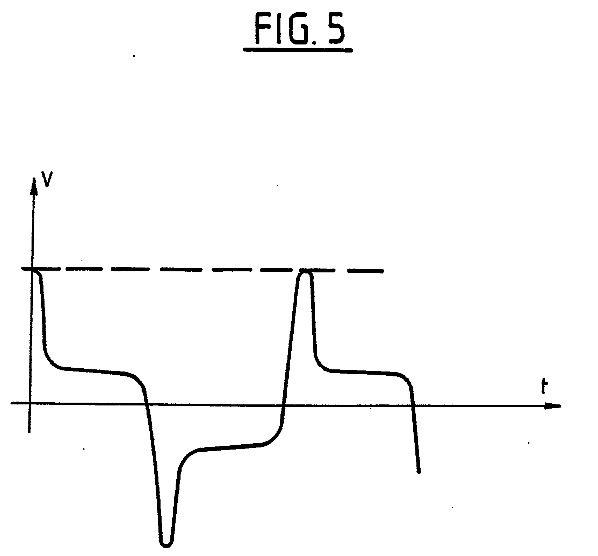

Il est maintenant fait référence à la figure 5. Celle-ci montre une forme d'onde d'excitation (sortie de la source 3, ou plus exactement de son transformateur 32), et cette forme d'onde comprend des impulsions initiales intenses, suivies d'un palier à un niveau beaucoup plus bas pendant tout le reste de chaque demi-période. Comme précédemment indiqué, une telle forme d'onde peut nota mment être obtenue en prévoyant que le transformateur 32 est du type à fer saturé.

Il a été observé que l'impulsion initiale de chaque demi-alternance crée une gaine de plasma autour du fil nu.Le champ électrique qui règne pendant le reste de la demi-période est suffisamment réduit pour que les ions créés au début du cycle puissent être entraînés par l'écoulement gazeux laminaire vers le plan de travail.

Cette disposition renforce les bénéfices obtenus par l'action du diélectrique gainant les fils isolés 22, telle qu'elle a été décrite plus haut. Mais elle pourrait aussi être employée dans une configuration comprenant uniquement des fils nus, si l'on désire simplement augmenter la portée de la neutralisation d'électricité statique.

## Revendications

1.- Dispositif du genre hotte à flux laminaire, du type comprenant :
- un meuble (1) définissant un plan de travail (12), dans un compartiment accessible d'un côté, et muni en partie supérieure (10) de moyens (18) pour produire vers le plan de travail un écoulement gazeux filtré et laminaire, de sorte que les matériaux disposés sur le plan de travail sont soustraits à l'influence de l'atmosphère ambiante,
caractérisé en ce qu'il comprend, interposé sur l'arrivée de l'écoulement gazeux au plafond de la hotte, un dispositif (2,3) éliminateur d'électricité statique comportant :
- un cadre rigide (20), isolant ou comportant des isolants pour supporter des fils,
- un premier jeu de fils conducteurs (21) parallèles, coplanaires, équidistants, tendus sur le cadre rigide,
- un second jeu de fils conducteurs (22) parallèles, sensiblement coplanaires au premier jeu, équidistants, tendus sur le cadre rigide, chacun sensiblement à égale distance entre deux fils du premier jeu,
- des moyens d'isolation en haute tension entre les fils du premier jeu et ceux du second jeu,
- une source (3) de haute tension alternative, en particulier à sortie par transformateur, dont les bornes de sortie (35) alimentent respectivement les fils (21) du premier jeu, et les fils (22) du second jeu,
- cette haute tension étant choisie pour engendrer une décharge Corona alternative dans chaque intervalle entre les fils des deux jeux, et produire par là un flux de charges des deux polarités, accompagnant l'écoulement laminaire, pour éliminer l'électricité statique à l'intérieur de la hotte.

2.- Dispositif selon la revendication 1, caractérisé en ce que la haute tension alternative possède une amplitude de crête comprise entre 4 et 10 kilovolts, et une fréquence comprise entre 50 et 1000 Hertz.

3.- Dispositif selon l'une des revendications 1 et 2, caractérisé en ce que la haute tension alternative possède une forme d'onde constituée, sur chaque alternance, d'une forte impulsion initiale, suivie d'un palier de faible niveau pendant le reste de l'alternance.

4.- Dispositif selon la revendication 3, caractérisé en ce que la sortie de la source de haute tension est fournie par un transformateur (32) à fer saturé.

5.- Dispositif selon l'une des revendications 1 à 4, caractérisé en ce que les moyens d'isolation comprennent des gaines isolantes placées sur les fils (22) du second jeu, dans leur partie tendue sur le cadre.

6.- Dispositif selon la revendication 5, caractérisé en ce qu'il comporte en outre un amplificateur différentiel de tension (40), à haute impédance d'entrée, passant le courant continu, dont la première entrée (41) est reliée à un capteur de potentiel situé dans la hotte, et l'autre entrée est reliée à la masse, tandis que sa sortie (44) sert à fournir une tension continue de correction, superposée à la source de haute tension alternative.

7.- Dispositif selon la revendication 6, caractérisé en ce que la sortie (44) de l'amplificateur (40) est reliée directement à la source de tension alternative sur la borne (35) du transformateur (32), un condensateur (38) étant interposé entre ladite borne et la borne (25) des fils du premier jeu.

8.- Dispositif selon la revendication 6, caractérisé en ce que la sortie (44) de l'amplificateur (40) commande le curseur (54) d'un diviseur de tension continue (55), ce curseur étant relié par ailleurs à la borne (35) du transformateur (32), un condensateur (38) étant interposé entre ladite borne et la borne (25) des fils du premier jeu.

9.- Dispositif selon la revendication 7, caractérisé en ce qu'il comporte un second condensateur (39) entre l'autre borne de sortie (36) de la source de haute tension et les fils (22) du second jeu, et en ce que la sortie (44) de l'amplificateur (40) est reliée par l'intermédiaire d'une résistance (58) à l'armature de ce second condensateur (39) située du côté des fils (22) du second jeu.

10. Dispositif selon la revendication 9, caractérisé en ce que la borne (35) de la source de haute tension est reliée directement à la borne (25) des fils du premier jeu.

11.- Dispositif selon l'une des revendications 6 à 10, caractérisé en ce que le capteur de potentiel est constitué par les fils (21) du premier jeu.

12.- Dispositif selon l'une des revendications 6 à 10, caractérisé en ce que le capteur de potentiel est constitué par une électrode auxiliaire (49), placée sur le plan de travail de la hotte, tandis que les fils (21) du premier jeu sont reliés à la masse.

13.- Dispositif selon la revendication 12, caractérisé en ce qu'il est prévu un condensateur (45) entre la sortie et la première entrée de l'amplificateur.

14.- Dispositif selon l'une des revendications précédentes, caractérisé en ce qu'il est prévu, au voisinage aval immédiat du dispositif éliminateur d'électricité statique, un second cadre (6) sur lequel est tendu un grillage à mailles très lâches, formant plan équipotentiel, de préférence relié à la masse.

15.- Dispositif selon la revendication 14, prise en combinaison avec l'une des revendications 6 à 13, caractérisé en ce que le capteur de potentiel est constitué par le grillage du second cadre (6).

16.- Dispositif selon l'une des revendications précédentes, caractérisé en ce que les moyens d'isolation comprennent une série de lamelles isolantes, interposées entre chaque fil du premier jeu et les fils du second jeu qui l'avoisinent.

17.- Dispositif selon l'une des revendications précédentes, caractérisé en ce que les fils du premier jeu comportent, dans leur partie tendue sur le cadre, des fils transversaux, parallèles entre eux, de courte longueur, formant des pointes de chaque côté du fil de manière à localiser les décharges.

18.- Dispositif selon l'une des revendications 1 à 16, caractérisé en ce que les fils du premier jeu sont constitués de profils à arêtes longitudinales, du genre utilisé pour les précipitateurs industriels.

## Patentansprüche

1. Vorrichtung nach Art eines Abzugs mit laminarer Strömung, umfassend:
   - ein Gehäuse (1), das eine Arbeitsfläche (15) in einem von einer Seite zugänglichen Abteil abgrenzt und im oberen Teil (10) mit einer Einrichtung (18) versehen ist, die auf die Arbeitsfläche einen laminaren Strom von gefiltertem Gas richtet, so daß die auf der Arbeitsfläche angeordneten Materialien dem Einfluß der Umgebungsluft entzogen sind, dadurch gekennzeichnet, daß sie am Eintritt des Gasstroms an der Decke des Abzugs eine statische Elektrizität beseitigende Einrichtung (2, 3) aufweist, bestehend aus:
   - einem steifen Rahmen (20) aus Isoliermaterial oder mit Isolatoren für die Halterung von Drähten,
   - einer ersten Gruppe von in dem steifen Rahmen parallel zueinander, in einer Ebene liegend, in gleichen gegenseitigen Abständen ausgespannten Leiterdrähten (21),
   - einer zweiten Gruppe von in dem steifen Rahmen parallel zueinander, im wesentlichen in der gleichen Ebene liegend wie die erste Leitergruppe, in gleichen gegenseitigen Abständen ausgespannten Leiterdrähten (22), die in im wesentlichen gleichem Abstand zwischen jeweils zwei Drähten der ersten Leitergruppe angeordnet sind,
   - Mittel zur Hochspannungsisolierung zwischen den Drähten der ersten Leitergruppe und denen der zweiten Leitergruppe,
   - eine Quelle (3) für Hochspannungswechselspannung, insbesondere mit Transformatorausgang, wobei die Ausgangsklemmen (35 bzw. 36) des Transformators die Drähte (21) der ersten Leitergruppe bzw. die Drähte (22) der zweiten Leitergruppe versorgen,
   - welche Hochspannung so gewählt ist, daß eine alternierende Koronaentladung in jedem Zwischenraum zwischen den Drähten der beiden Gruppen erzeugt wird und daß dort ein Strom von Ladungen der beiden Polaritäten hervorgerufen wird, der die laminare Strömung begleitet, um die statische Elektrizität im Inneren des Abzugs zu beseitigen.

2. Vorrichtung nach Anspruch 1, dadurch gekennzeichnet, daß die Hochspannungswechselspannung eine Spitzenamplitude zwischen 4 und 10 kV und eine Frequenz zwischen 50 und 1000 Hz aufweist.

3. Vorrichtung nach Anspruch 1 oder 2, dadurch gekennzeichnet, daß die Hochspannungswechselspannung eine Wellenform aufweist, die in jeder Halbperiode aus einem hohen Anfangsimpuls besteht, auf den für den Rest der Halbperiode eine Stufe geringer Höhe folgt.

4. Vorrichtung nach Anspruch 3, dadurch gekennzeichnet, daß der Ausgang der Hochspannungsquelle mit einem Eisen-Sättigungs-Transformator (32) versehen ist.

5. Vorrichtung nach einem der Ansprüche 1 bis 4, dadurch gekennzeichnet, daß die Isolationsmittel aus Isolierschläuchen bestehen, die in dem Spannbereich des Rahmens über die Drähte (22) der zweiten Leitergruppe gezogen sind.

6. Vorrichtung nach Anspruch 5, dadurch gekennzeichnet, daß außerdem ein Differential-Spannungsverstärker (40) mit hoher Eingangsimpedanz vorgesehen ist, der den Gleichstrom überträgt, wobei der erste Eingang (41) des Verstärkers mit einem in dem Abzug angeordneten Potential-Meßfühler verbunden ist und der andere Eingang an Masse liegt, während der Verstärkerausgang (44) zur Lieferung einer Korrekturgleichspannung dient, die der Hochspannungs-Wechselspannungs-Quelle überlagert wird.

7. Vorrichtung nach Anspruch 6, dadurch gekennzeichnet, daß der Ausgang (44) des Verstärkers (40) durch die Klemme (35) des Transformators (32) direkt an die Wechselspannungsquelle angeschlossen ist, und daß ein Kondensator (38) zwischen die genannte Klemme und die Klemme (25) der Drähte der ersten Leitergruppe geschaltet ist.

8. Vorrichtung nach Anspruch 6, dadurch gekennzeichnet, daß der Ausgang (44) des Verstärkers (40) den Schieber (54) eines Gleichspannungs-Spannungsteilers (55) steuert, welcher Schieber außerdem an die Klemme (35) des Transformators (32) angeschlossen ist, und daß ein Kondensator (38) zwischen die genannte Klemme und die Klemme (25) der Drähte der ersten Leitergruppe geschaltet ist.

9. Vorrichtung nach Anspruch 7, dadurch gekennzeichnet, daß sie einen zweiten Kondensator (39) zwischen der anderen Ausgangsklemme (36) der Hochspannungsquelle und den Drähten (22) der zweiten Leitergruppe aufweist, und daß der Ausgang (44) des Verstärkers (40) über einen Widerstand (58) mit der zu den Drähten (22) der zweiten Leitergruppe gerichteten Belegung dieses zweiten Kondensators (39) verbunden ist.

10. Vorrichtung nach Anspruch 9, dadurch gekennzeichnet, daß die Klemme (35) der Hochspannungsquelle direkt mit der Klemme (25) der Drähte der ersten Leitergruppe verbunden ist.

11. Vorrichtung nach einem der Ansprüche 6 bis 10, dadurch gekennzeichnet, daß der Potential-Meßfühler von den Drähten (21) der ersten Leitergruppe gebildet ist.

12. Vorrichtung nach einem der Ansprüche 6 bis 10, dadurch gekennzeichnet, daß der Potential-Meßfühler von einer auf die Arbeitsfläche des Abzugs gebrachten Hilfselektrode (49) gebildet ist, während die Drähte (21) der ersten Leitergruppe an Masse liegen.

13. Vorrichtung nach Anspruch 12, dadurch gekennzeichnet, daß ein Kondensator (45) zwischen den Ausgang und den ersten Eingang des Verstärkers geschaltet ist.

14. Vorrichtung nach einem der vorhergehenden Ansprüche, dadurch gekennzeichnet, daß der Vorrichtung zur Beseitigung von statischer Elektrizität unmittelbar nachgeschaltet ein zweiter Rahmen (6) vorgesehen ist, auf den ein Gitter mit sehr lockeren Maschen gespannt ist, das eine vorzugsweise an Masse liegende Äquipotentialfläche bildet.

15. Vorrichtung nach Anspruch 14, in Verbindung mit einem der Ansprüche 6 bis 13, dadurch gekennzeichnet, daß der Potential-Meßfühler durch das Gitter des zweiten Rahmens (6) gebildet ist.

16. Vorrichtung nach einem der vorhergehenden Ansprüche, dadurch gekennzeichnet, daß die Isoliermittel als eine Folge von Isolierblättchen ausgebildet sind, die zwischen jeden Draht der ersten Leitergruppe und die jeweils benachbarten Drähte der zweiten Leitergruppe gebracht sind.

17. Vorrichtung nach einem der vorhergehenden Ansprüche, dadurch gekennzeichnet, daß die Drähte der ersten Leitergruppe in ihrem in dem Rahmen ausgespannten Abschnitt zueinander parallele Querdrähte geringer Länge aufweisen, welche auf beiden Seiten des Drahts Spitzen bilden, um die Entladungen zu lokalisieren.

18. Vorrichtung nach einem der Ansprüche 1 bis 16, dadurch gekennzeichnet, daß die Drähte der ersten Leitergruppe aus Profilen mit Längskanten bestehen, wie sie für die in der Industrie eingesetzten Abscheider verwendet werden.

**Claims**

1. Laminar flow-type work station, of the kind comprising:
   – a table (1) defining a working plane (12), in a compartment accessible from one side, provided in the upper part (10) with means (18) for producing a laminar flow of filtered gas towards the working plane, so that the materials placed on the working plane are subject to the influence of the ambient atmosphere,
   characterised in that it comprises, interposed at the inlet for the gas flow at the top of the work station, a device (2, 3) for eliminating static electricity, comprising:
   – a rigid frame (20), which acts as an insulator or which carries insulators to support wires,
   – a first set of parallel, co-planar, equidistant wires (21) stretched over the rigid frame,
   – a second set of parallel, equidistant wires (22) which are substantially co-planar with the first set, stretched over the rigid frame, each wire (22) being substantially evenly spaced between two wires of the first set,
   – insulating means for high voltages between the wires of the first and second sets,
   – a source (3) of alternating high voltage, in particular with a transformer output, whose output terminals (35) supply the wires (21) of the first set and the wires (22) of the second set respectively,
   – this high voltage being chosen to generate an alternating Corona discharge in each gap between the wires of the two sets, and to produce thereby a flux of charges of both polarities, accompanying the laminar flow, to eliminate static electricity inside the work station.

2. Apparatus according to claim 1, characterised in that the alternating high voltage has a peak amplitude of between 4 and 10 kilovolts, and a frequency of between 50 and 1000 Hertz.

3. Apparatus according to one of claims 1 and 2, characterised in that the alternating high voltage has a wave form consisting, in each alternation, of a strong initial pulse, followed by a low-level plateau throughout the rest of the alternation.

4. Apparatus according to claim 3, characterised in that the output of the high voltage source is supplied by a transformer (32) with a saturated iron.

5. Apparatus according to one of claims 1 to 4, characterised in that the insulating means comprise insulating sheaths placed around those parts of the wires (22) of the second set which are stretched over the frame.

6. Apparatus according to claim 5, characterised in that it further comprises a differential voltage amplifier (40) with a high input impedance, passing the continuous current, whose first input (41) is connected to a potential sensor located in the work station, and the other input is connected to earth, whereas its output (44) supplies a continuous correction voltage superimposed on the alternating high voltage source.

7. Apparatus according to claim 6, characterised in that the output (44) of the amplifier (40) is connected directly to the alternating high voltage source at a terminal (35) of the transformer (32), a condenser (38) being interposed between said terminal and the terminal (25) of the wires of the first set.

8. Apparatus according to claim 6, characterised in that the output (44) of the amplifier (40) controls the cursor (54) of a continuous current divider (55), this cursor being connected furthermore to the terminal (35) of the transformer (32), a condenser (38) being interposed between said terminal and the terminal (25) of the wires of the first set.

9. Apparatus according to claim 7, characterised in that it comprises a second condenser (39) between the other output terminal (36) of the high voltage source and the wires (22) of the second set, and in that the output (44) of the amplifier (40) is connected via a resistor (58) to the armature of said second condenser (39) located next to the wires (22) of the second set.

10. Apparatus according to claim 9, characterised in that the terminal (35) of the high voltage source is connected directly to the terminal (25) of the wires of the first set.

11. Apparatus according to one of claims 6 to 10, characterised in that the potential sensor consists of the wires (21) of the first set.

12. Apparatus according to one of claims 6 to 10, characterised in that the potential sensor consists of an auxiliary electrode (49) located in the working plane of the work station, whereas the wires (21) of the first set are connected to earth.

13. Apparatus according to acclaim 12, characterised in that a condenser (45) is provided between the output and the first input of the amplifier.

14. Apparatus according to one of the preceding claims, characterised in that in the region immediately downstream of the device for eliminating static electricity, a second frame (6) is provided on which a very loose grid is mounted, forming an equipotential plane, preferably connected to earth.

15. Apparatus according to claim 14, in combination with one of claims 6 to 13, characterised in that the potential sensor consists of the grid of the second frame (6).

16. Apparatus according to one of the preceding claims, characterised in that the insulating means comprise a series of insulating blades interposed between each wire of the first set and the wires of the adjacent second set.

17. Apparatus according to one of the preceding claims, characterised in that the wires of the first set comprise, in their part mounted on the frame, transverse wires parallel with one another, of short length, tapering on either side of the wire so as to localise discharges.

18. Apparatus according to one of claims 1 to 16, characterised in that the wires of the first set are formed of profiles with longitudinal ridges, of the type used for industrial condensers.

EP 0 267 070 B1

PRODUCTION D'AIR FILTRÉ
EN ECOULEMENT LAMINAIRE

18

FIG.1

10

2

3

ELECTRONIQUE
DE
HAUTE TENSION

6

12

15

1

11

13

S

## FIG. 2A

# FIG. 2B

EP 0 267 070 B1

FIG.2C

FIG. 3A

EP 0 267 070 B1

# FIG. 3B

FIG. 3C

# FIG. 4

EP 0 267 070 B1

# FIG. 5